# EUROPÄISCHE PATENTSCHRIFT

(11) **EP 1 787 748 B1**
(45) Veröffentlichungstag und Bekanntmachung des Hinweises auf die Patenterteilung: **15.07.2009**
(21) Anmeldenummer: 06124185.7
(22) Anmeldetag: 16.11.2006
(51) Int. Cl.: B23P 19/00, F16L 1/10, B23K 37/053, B64F 5/00, B25B 11/02

(54) **Verfahren und Hilfsvorrichtung zum Konfektionieren von Hydraulik-Schlauchleitungen**
Auxiliary device and method of manufacturing hydraulic hoses
Procédé et dispositif auxiliare pour la fabrication de tuyaux hydrauliques

(30) Priorität: 18.11.2005 DE 202005017893 U
(43) Veröffentlichungstag der Anmeldung: 23.05.2007
(73) Patentinhaber: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patentanwälte Dr. Solf & Zapf

(56) Entgegenhaltungen:
- EP-A- 0 271 393
- EP-A- 0 767 297
- WO-A-94/29045
- DE-A1- 4 334 116
- GB-A- 1 505 258
- NL-A- 7 304 736
- SU-A1- 770 727
- US-A- 5 040 716
- US-A- 5 305 992
- US-A- 5 732 455
- PATENT ABSTRACTS OF JAPAN Bd. 2000, Nr. 22, 9. März 2001 (2001-03-09) & JP 2001 129688 A (TAKABA MASAHARU), 15. Mai 2001 (2001-05-15)
- PATENT ABSTRACTS OF JAPAN Bd. 1999, Nr. 08, 30. Juni 1999 (1999-06-30) & JP 11 058074 A (KOMATSU LTD), 2. März 1999 (1999-03-02)
- PATENT ABSTRACTS OF JAPAN Bd. 2000, Nr. 14, 5. März 2001 (2001-03-05) & JP 2000 320733 A (NIPPON STEEL CORP), 24. November 2000 (2000-11-24)

## Beschreibung

Die vorliegende Erfindung betrifft ein Verfahren gemäß dem Oberbegriff des Anspruchs 1 sowie eine Hilfsvorrichtung zum Konfektionieren von Hydraulik-Schlauchliaitungen, wobei jeweils zumindest ein Leitungsende eines Schlauchstückes mit einer starren, gekrümmten Bogenarmatur zu verbinden ist.

Hydraulische (eventuell auch pneumatische) Druckleitungen werden zur Verbindung von relativ zueinander beweglichen Druckaggregaten benötigt, beispielsweise bei Baumaschinen, wie Baggerarmen, zur Versorgung von beweglichen Antriebszylindern mit Druckmittel. Dabei ist jede Druckleitung als flexible, druckfeste Schlauchleitung mit zwei endseitigen Anschlussarmaturen konfektioniert, In vielen Fallen ist mindestens eine der Anschlussarmaturen als mit einem bestimmten Krümmungswinkel gekrümmte Bogenarmatur ausgebildet, um im angeschlossenen Zustand einen möglichst knickfreien und allenfalls mit möglichst großem Radius gekrümmten Verlauf der Schlauchleitung zu erreichen. Je nach einbauspezifischer Ausrichtung der beiden Anschlussarmaturen bzw. der zugehörigen am Einbauort vorhandenen Gegenarmaturen ist es häufig erforderlich, im Falle von zwei Bogenarmaturen diese um die Leitungsachse relativ zueinander verdreht mit dem Schlauch zu verbinden, um im eingebauten Zustand schädliche Torsionen der Schlauchleitung zu vermeiden. Darüber hinaus weisen solche Schlauchleitungen eine "natürliche", herstellungsbedingte Krümmung auf. Die Schlauchleitungen lassen sich daher eigentlich nur entsprechend dieser natürlichen Krümmung biegen. Eine Biegung in Abweichung von der natürlichen Krümmung müßte dem Schlauch aufgezwungen werden, was zur Folge hätte, dass der Schlauch die Tendenz hat, dieser aufgezwungenen Krümmung auszuweichen Im Falle einer Anordnung von mehreren Schläuchen nebeneinander würde sich daraus eine Unparalieütät der Schläuche ergeben. Deshalb soll eine relative Ausrichtung der jeweiligen Bogenarmatur zur Anpassung an diese natürliche Schlauchkrümmung erfolgen, damit eine jeweils gewünschte einbauspezifische Schlauchkrümmung bezüglich der Krümmungsebene der natürlichen Krümmung entspricht. Die beschriebenen Ausrichtungen müssen bisher bei der Leitungskonfektionierung manuell erfolgen, was insbesondere bezüglich der Anpassung an die natürliche Scfilauchkrüinmung umständlich, zeitaufwendig und auch sehr ungenau ist. Besonders schwierig ist ein manuelles Winkel-Ausrichten von Bogenarmaturen mit sehr stumpfen Krümmungswinkeln, weil dabei die jeweilige Krümmungsebene kaum noch rein optisch erkennbar ist.

Das Dokument EP 0 271 393 A1 behandelt die Herstellung einer Auspuffanlage für ein Kraftfahrzeug. Das Dokument betrifft somit nicht die spezielle, der vorliegenden Erfindung zu Grunde liegende Problematik. Zwar beschreibt das Dokument eine Art "Hilfsvorrichtung" mit mehreren Montagehaltern, die zur ausgerichteten Fixierung von Rohren beim Verbinden untereinander und/oder mit Scfialldämpfertöpfen dient. Jeder Halter ist in mehrfacher Hinsicht verstellbar, und zwar in der Ebene verschiebbar sowie um Winkel α, β verschwenkbar, Diese Verstellmöglichkeiten dienen aber ausschließlich zur Positionierung der Rohre.

Der vorliegenden Erfindung liegt die Aufgabe zugrunde, ein Verfahren und eine Hilfsvorrichtung zum Konfektionieren von solchen Schlauchleitungen zu schaffen, um die beschriebenen Ausrichtungen bei beliebigen Bogenarmaturen auf einfache und schnelle Weise sowie mit hoher Genauigkeit zu ermöglichen,

Erfindungsemäß wird dies durch ein Verfahren gemäß Anspruch 1 bzw, durch eine neuartige Hilfsvorrichtung mit den Merkmalen des Anspruchs 3 erreicht. Vorteilhafte Ausgestaltungen der Erfindung sind in den abhängigen Ansprüchen definiert.

Demnach weist die erfindungsgemäße Hilfsvorrichtung zunächst eine Schlauch-Ausrichteinrichtung auf, mit der die in der jeweils erforderlichen Länge abgeschnittene Schlauchleitung so im Raurm ausgerichtet wird, dass sie mit ihrer durch die natürliche Krümmung definierten Krümmungsebene in einer Bezugsebene der Hilfsvorrichtung liegt. Die Hilfsvorrichtung weist weiter eine Winkel-Birtstelleinrichtung auf, mit der eine Bogenarmatur relativ zu der ausgerichteten Schlauchleitung auf einen jeweils einbauspezifisch vorgegebenen Sonder-Drehwinkel einer von der gekrümmten Längsachse der jeweils anzurschließenden Bogenarmatur definierten Armatur-Krümmungsebene relativ zu der Schlauch-Bezugsebene ausgerichtet werden kann.

Durch die Erfindung ist erstmals und auch bei nur schwach (mit stumpfem Winkel) gekrümmten Bogenarmaturen eine exakte Winkelausrichtung unter Berücksichtigung der natürlichen Schlauchkrümmung möglich, Dadurch werden im späteren Einbauzustand aufgezwungene Torsionen und Biegungen in Abweichung von der natürlichen Krümmungsebene vermieden.

In einer vorteilhaften Ausgestaltung der Erfindung ist die Winkel-Einstellvorrichtung zusätzlich auch dazu aufgelegt, einen relativen Verdrehwinkel zwischen zwei endseitigen Bogenarmaturen einer Hydraulik-Schlauchleitung exakt einzusteigen.

Anhand der beiliegenden Zeichnungen soll die Erfindung im Folgenden beispielhaft genauer erläutert werden. Dabei zeigen:
- Fig. 1 bis 8: Beispiele für mögliche Ausgestaltungen einer Hydraulik-Schlauchleitung, wobei die Darstellungen a) jeweils eine Seitenansicht der Schlauchleitung und die Darstellungen b) jeweils eine Stirnansicht in Pfeilrichtung b zeigen,
- Fig.9: eine schematische Seitenansicht einer erfindungsgemäßen Hilfsvorrichtung,
- Fig. 10: eine Perspektivansicht der Hilfsvorrichtung in bevorzugter Ausgestaltung,
- Fig. 11: eine weitere Perspektivansicht der Hilfsvorrichtung nach Fig. 10 aus anderer Blickrichtung,
- Fig. 12: eine vergrößerte Teilansicht auf den Bereich einer erfindungsgemäßen Winkel-Einstelleinrichtung und
- Fig. 13: eine Stirnansicht in Pfeilrichtung XIII gemäß Fig. 12.

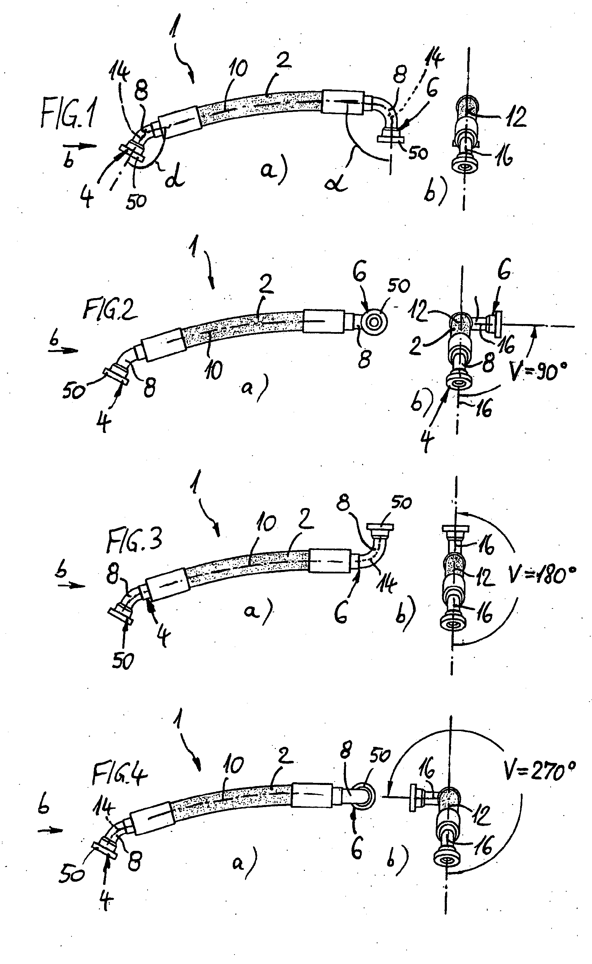

In den Fig. 1 bis 8 ist zunächst beispielhaft jeweils eine konfektionierte Hochdruck-Schlauchleitung 1 für ein hydraulisches (eventuell auch pneumatisches) Druckmedium dargestellt. Diese Schlauchleitung besteht aus einem mit bestimmter Länge abgelängten Schlauchstück 2 und zwei endseitig mit den Leitungsenden druckfest verbundenen, in aller Regel aufgepressten Anschlussarmaturen 4, 6, die häufig als Bogenarmaturen mit einem gekrümmten Rohrstück 8 ausgebildet sind. Das gekrümmte Rohrstück 8 erstreckt sich über einen bestimmten Krümmungswinkel α. Das Material der Schlauchleitung 1 bzw. des Schlauchstückes 2 weist herstellungsbedingt eine natürliche Krümmung auf, so dass seine Längsachse 10 eine natürliche Krümmungsebene 12 definiert. Ferner definiert jede Bogenarmatur mit der gekrümmten Längsachse 14 des Rohrstückes 8 eine Krümmungsebene 16.

Bei der Ausführung nach Fig. 1 und 2 liegen die natürliche Schlauch-Krümmungsebene 12 und die Bogen-Krümmungsebenen 16 in einer gemeinsamen Ebene. Zudem entsprechen die Krümmungsrichtungen der Bogenarmaturen 4, 6 der Richtung der natürlichen Schlauchkrümmung. Somit liegt hier keine relative Verdrehung zwischen den Teilen der Schlauchleitung 1 vor.

Bei den weiteren Ausführungen gemäß Fig. 2 bis 4 ist jeweils die zweite Bogenarmatur 6 relativ zu der ersten Bogenarmatur 4 um einen bestimmten, einbauspezifisch vorgegebenen Verdrehwinkel V verdreht. Dabei liegt aber die erste Bogenarmatur 4 mit ihrer Krümmungsebene 16 bei gleicher Krümmungsrichtung in der gleichen Ebene mit der natürlichen Schlauch-Krümmungsebene 12.

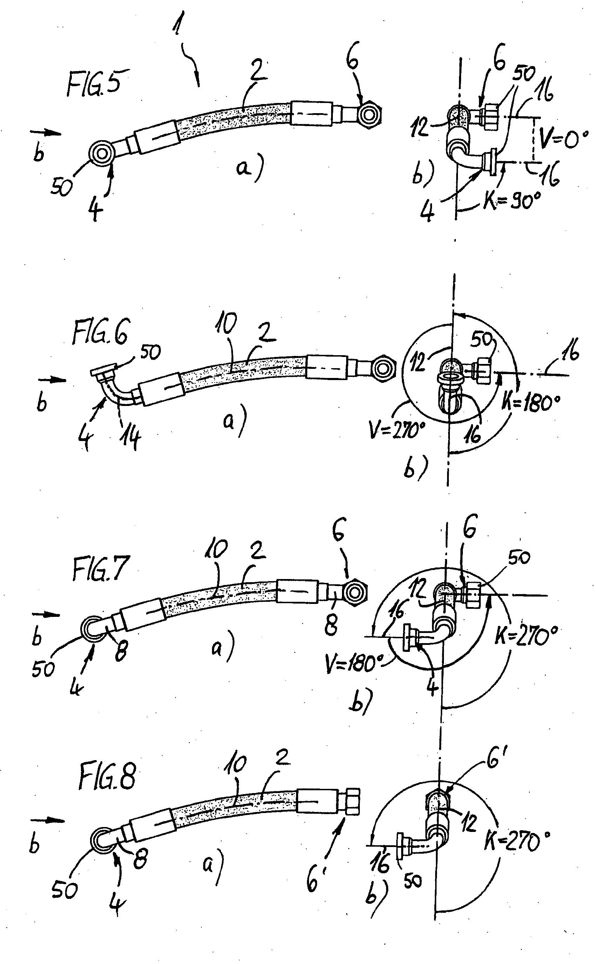

Im Gegensatz dazu ist bei den weiteren Ausführungen gemäß Fig. 5 bis 8 jeweils die erste Bogenarmatur 4 mit ihrer Krümmungsebene 16 um einen einbauspezifisch vorgegebenen Sonder-Drehwinkel K gegenüber der natürlichen Schlauch-Krümmungsebene 12 verdreht. Dabei können zusätzlich auch die Krümmungsebenen 16 der Bogenarmaturen 4, 6 - analog zu Fig. 2 bis 4 - relativ zueianander um einen bestimmten Verdrehwinkel V verdreht sein. Bei der Ausführung nach Fig. 5 ist aber V = 0, und im Beispiel nach Fig. 8 handelt es sich bei der zweiten Anschlussarmatur 6' nicht um eine Bogenarmatur, sondern um eine zum Schlauchstück 2 gleichachsige Ausführung, so dass hier ein Verdrehwinkel V nicht vorgesehen sein kann.

Die genannten Winkel K und/oder V müssen beim Konfektionieren der Hydraulik-Schlauchleitung 1 möglichst genau eingestellt werden.

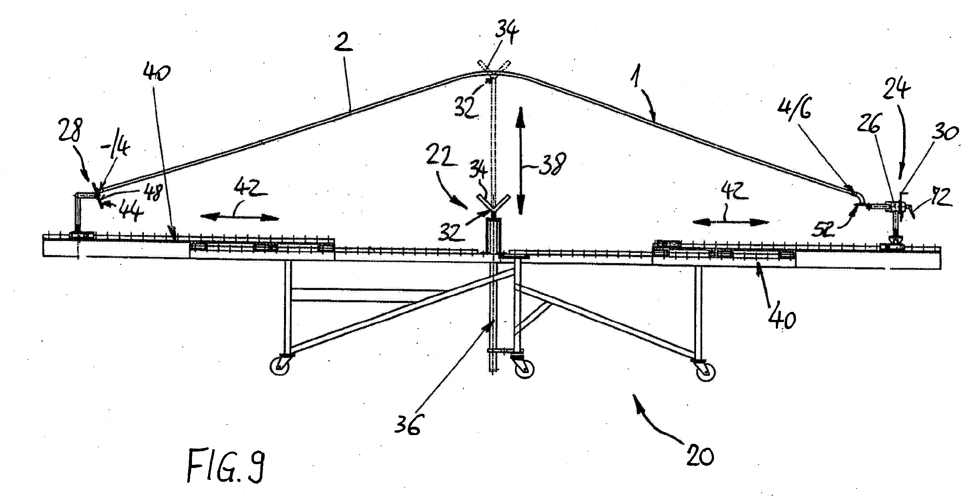

Eine dazu konzipierte, erfindungsgemäße Hilfsvorrichtung 20 wird im Folgenden anhand der Fig. 9 bis 13 beschrieben.

Die erfindungsgemäße Hilfsvorrichtung 2 weist zunächst eine Schlauch-Ausrichteinrichtung 22 auf, mit der das zu konfektionierende Schlauchstück 2 entsprechend seinem natürlichen Krümmungsverlauf derart relativ zu der Hilfsvorrichtung 20 ausgerichtet werden kann, dass die von der gekrümmten Längsachse 10 definierte natürliche Krümmungsebene 12 eine Bezugsebene für die weiteren Einstellungen bildet. Weiterhin ist eine Winkel-Einstelleinrichtung 24 mit einer (ersten) Winkelskala 26 vorgesehen, mit der die erste anzuschließende Bogenarmatur 4 relativ zu dem ausgerichteten Schlauchstück 2 auf den jeweiligen Sonder-Drehwinkel K durch relative Verdrehung der Armatur-Krümmungsebene 16 relativ zu der Schlauch-Bezugsebene 12 eingestellt werden kann. Nach dieser Einstellung wird die Armatur 4 mit dem Schlauchstück 2 verpresst, und zwar in einer separaten, nicht dargestellten Presseinrichtung.

In bevorzugter Ausgestaltung ist gegenüberliegend, d. h. im Bereich des anderen Leitungsendes des ausgerichteten Schlauchstückes 2, eine Armatur-Ausrichteinrichtung 28 angeordnet, mit der die mit dem Schlauchstück 2 verbundene erste Armatur 4 derart ausgerichtet werden kann, dass deren gekrümmte Längsachse 14 bzw. die von dieser definierte Krümmungsebene 16 als Armatur-Bezugsebene fungiert. Mit der Winkel-Einstelleinrichtung 24 kann dann am zweiten Leitungsende die weitere, zweite Bogenarmatur 6 bezüglich des Verdrehwinkels V ausgerichtet werden, indem die Krümmungsebene 16 der zweiten Bogenarmatur 6 relativ zu der ausgerichteten ersten Bogenarmatur 4 und der von dieser definierten Armatur-Bezugsebene 16 verdreht wird. Grundsätzlich kann diese Verdrehung ebenfalls anhand der Winkelskala 26 erfolgen. Vorzugsweise ist aber die Winkel-Einstelleinrichtung 24 hierzu mit einer zweiten Winkelskala 30 ausgestattet. Einzelheiten hierzu werden im Folgenden noch genauer beschrieben.

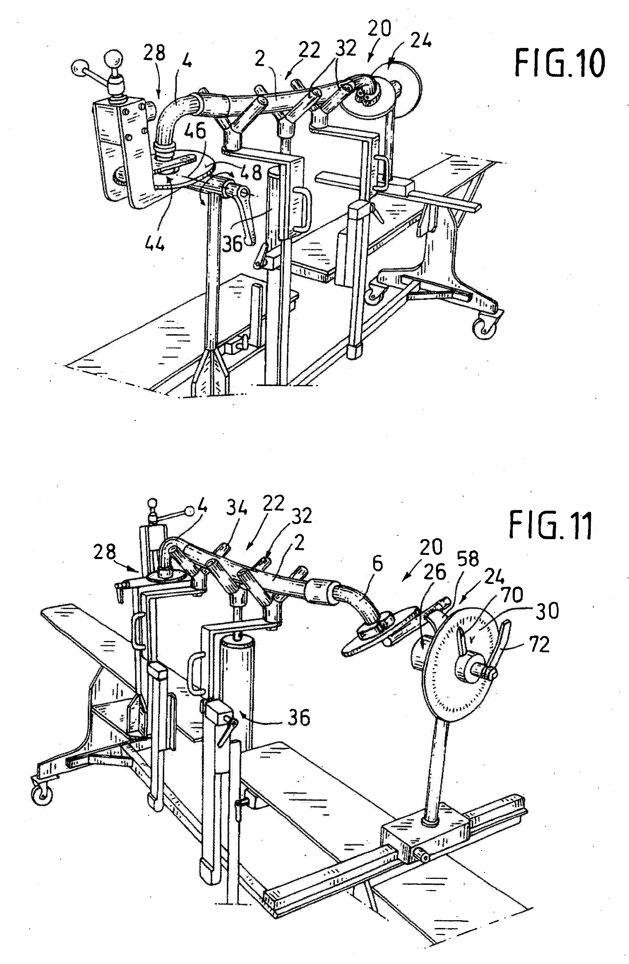

Die Schlauch-Ausrichteinrichtung 22 weist gemäß Fig. 9 mindestens ein Aufnahmeelement 32 zu fixierenden Aufnahme des Schlauchstückes 2 auf, wobei dieses Aufnahmeelement 32 für den jeweiligen natürlichen Krümmungsverlauf des Schlauchstückes 2 verstellbar ist. Wie sich aus Fig. 10 und 11 ergibt, sind bevorzugt mehrere, beispielsweise drei, über den Verlauf des Schlauchstückes 2 verteilt angeordnete Aufnahmeelemente 32 vorgesehen. Das bzw. jedes Aufnahmeelement 32 weist ein gabelartiges Stützelement 34 zum Einlegen des Schlauchstückes 2 sowie ein insbesondere vertikal verstellbares Stellelement 36 auf. Dadurch kann das bzw. jedes Aufnahmeelement 32 bzw. sein Stützelement 34 zur Anpassung an die natürliche Schlauchkrümmung vertikal in Richtung des Doppelpfeils 38 in Fig. 9 verstellt werden. Dadurch wird die Schlauch-Krümmungsebene als Bezugsebene 12 vertikal im Raum ausgerichtet. Das/jedes Stellelement 36 kann mit Vorteil von einem linear bezüglich der Höhe des Stützelementes 34 verstellbaren Druckzylinder gebildet sein (hydraulisch oder pneumatisch).

Wie sich weiter insbesondere aus Fig. 9 ergibt, sind die Winkel-Einstelleinrichtung 24 und die Armatur-Ausrichteinrichtung 28 zur Anpassung an die Länge des jeweiligen Schauchstückes 2 relativ zueinander verstellbar, und zwar insbesondere über Linearführungen 40, so dass der gegenseitige Abstand in Doppelpfeilrichtung 42 verstellbar ist.

Gemäß Fig. 9 und 10 weist die Armatur-Ausrichteinrichtung 28 ein Anlageelement 44 zur definierten Positionierung der ersten Bogenarmatur 4 auf. Dabei ist das Anlageelement 44 zur Anpassung an den jeweiligen Krümmungswinkel α der Bogenarmatur 4 einstellbar, und zwar um eine insbesondere horizontale, ortsfest im Raum ausgerichtete Verstellachse 46 schwenkbar. Das Anlageelement 44 ist plattenförmig ausgebildet und weist eine Auflagefläche 48 für einen Verbindungsflansch 50 (vgl. Fig. 1 bis 8) der Bogenarmatur 4 auf. Der Verbindungsflansch 50 definiert eine mündungsseitige Verbindungsebene, die senkrecht zur mündungsseitigen Öffnungsachse der Bogenarmatur 4 liegt. Dadurch liegt auch die Krümmungsebene 16 der Bogenarmatur 4 als Bezugsebene stets senkrecht zur Auflagefläche 48 des plattenförmigen Anlageelementes 44. Da die Verstellachse 46 horizontal und in Querrichtung senkrecht zur Krümmungsebene 16 verläuft, verläuft die Krümmungsebene 16 vertikal und in Längsrichtung des Schlauchstückes 2, folglich deckungsgleich mit der als Bezugsebene fungierenden Schlauch-Krümmungsebene 12.

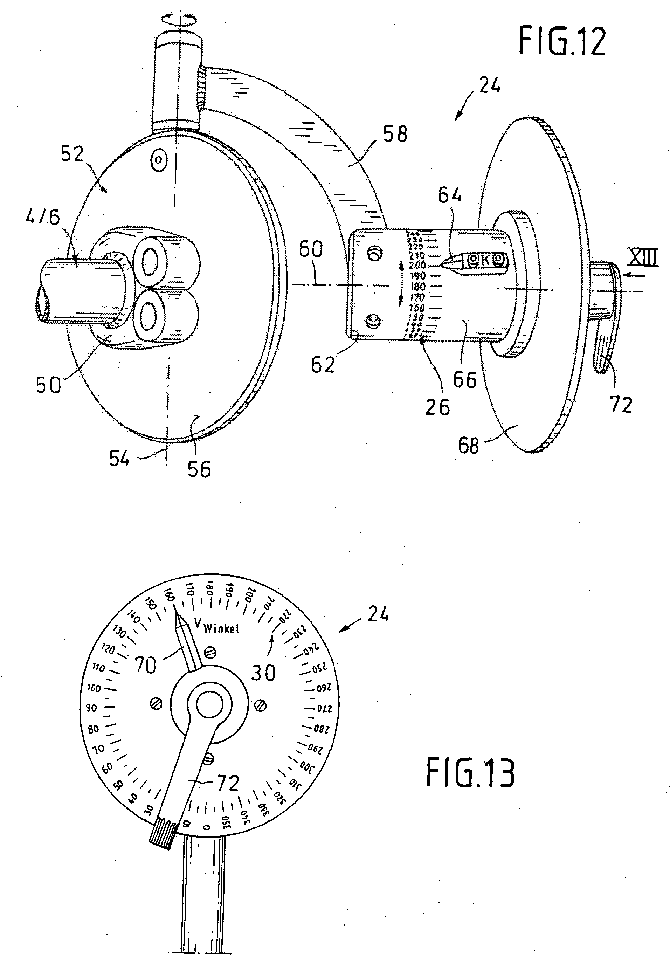

Wie am Besten in Fig. 12 und 13 erkennbar ist, weist die Winkel-Einstelleinrichtung 24 ebenfalls ein Anlageelement 52 zur definierten Positionierung der jeweils bezüglich des Sonder-Drehwinkels K oder des Verdrehwinkels V auszurichtenden Bogenarmatur 4 bzw. 6 auf. Auch dieses Anlageelement 52 ist zur Anpassung an den jeweiligen Krümmungswinkel α der Bogenarmatur 4 bzw. 6 einstellbar, und zwar gemäß Fig. 12 um eine quer verlaufende Verstellachse 54. Hierbei ist allerdings die Verstellachse 54 mittels der Winkel-Einstelleinrichtung 24 definiert verdrehbar. Dazu ist das ebenfalls plattenförmige und eine Aufnahmefläche 56 analog zur Auflagefläche 48 des anderen Anlageelementes 44 aufweisende Anlageelement 52 über ein bogenförmiges, sich über einen Winkel von 90° erstreckendes Verbindungselement 58 mit einem um eine Winkel-Stellachse 60 verdrehbaren Drehteil 62 der Winkel-Einstelleinrichtung 24 verbunden. Durch das Verbindungselement 58 verlaufen die Winkel-Stellachse 60 und die Verstellachse 54 des Anlageelementes 52 stets senkrecht zueinander. Das Drehteil 62 weist auf seinem zylindrischen Außenumfang die erste Winkelskala 26 für den Sonder-Drehwinkel K auf, die relativ zu einem feststehenden Zeiger 64 drehbar ist. Das Drehteil 62 ist in einem Festteil 66 gelagert, wobei das Festteil 66 den Zeiger 64 für die drehbare Winkelskala 26 trägt und auf seiner der drehbaren Winkelskala 26 gegenüberliegenden Seite die zweite Winkelskala 30 für den Verdrehwinkel V aufweist. Vorzugsweise ist das Festteil 66 dazu mit einer radialen Scheibe 68 verbunden, die auf ihrer vom Festteil 66 wegweisenden Stirnseite die zweite Winkelskala 30 trägt (siehe Fig. 13). Der zweiten, feststehenden Winkelskala 30 ist ein zusammen mit dem Drehteil 62 drehbarer Zeiger 70 zugeordnet.

Durch die beschriebene, bevorzugte Ausgestaltung der Winkel-Einstelleinrichtung 24 und durch eine entsprechende Skalenrichtung der Winkelskalen 26 und 30 wird erreicht, dass bei Drehung des Drehteils 62 in einer Richtung die Winkelskalen 26, 30 gegenläufig sind.

Für die manuelle Verdrehung der Winkel-Einstelleinrichtung 24 ist gemäß Fig. 13 ein Handhebel 72 vorgesehen.

Abschließend soll kurz der Arbeitsablauf zum Konfektionieren einer Schlauchleitung 1 erläutert werden.

Zunächst wird das Schlauchstück 2 mit der geforderten Länge abgelängt und mit seiner natürlichen Krümmung mit der Schlauch-Ausrichteinrichtung 22 so positioniert, dass seine natürliche Krümmungsebene 12 als Bezugsebene vorzugsweise vertikal im Raum verläuft. In dieser ausgerichteten Lage erfolgt eine Vormontage der ersten Bogenarmatur 4 durch Zusammenstecken mit dem Schlauchstück 2 auf der Seite der Winkel-Einstelleinrichtung 24. Die Bogenarmatur 4 wird mit dem Verbindungsflansch 50 mittig auf der Auflagefläche 56 des Anlageelementes 52 positioniert. Die erste Bogenarmatur 4 kann jetzt durch Verdrehen des Drehteils 62 auf den gewünschten K-Winkel sehr genau eingestellt werden (siehe Fig. 12). In der ausgerichteten Stellung wird dann die Bogenarmatur 4 mit dem Schlauchstück 2 verpresst, bevorzugt in einer gesonderten Presseinrichtung.

Bei einer Ausführung der Schlauchleitung 1 mit einer gegenüberliegenden zweiten Bogenarmatur 6 wird das Schlauchstück 2 auf der erfindungsgemäßen Hilfsvorrichtung 20 umgedreht, d. h. die schon montierte erste Bogenarmatur 4 wird auf der Seite der Armatur-Ausrichteinrichtung 28 mittels des Anlageelementes 44 so ausgerichtet, dass die Armatur-Krümmungsebene 16 als Bezugsebene vertikal ausgerichtet ist. In dieser Ausrichtstellung wird dann die zweite Bogenarmatur 6 vormontiert und mit dem Verbindungsflansch 50 mittig auf dem Anlageelement 52 der Einstelleinrichtung 24 positioniert. Es erfolgt dann die V-Winkel-Einstellung durch Verdrehen des Drehteils 62 anhand der zweiten Winkelskala 30 gemäß Fig. 13. Schließlich wird auch die zweite Bogenarmatur 6 mit dem Schlauchstück 2 verpresst.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Verfahren zum Konfektionieren von Hydraulik-Schlauchleitungen (1), wobei jeweils zumindest ein Leitungsende eines Schlauchstückes (2) mit einer staren, gekrümmten Bogenarmatur (4, 6) verbunden wird,
**dadurch gekennzeichnet, dass** das Schlauchstück (2) entsprechend einem natürlichen, herstellungsbedingten Krümmungsverlauf derart mittels einer Schlauch-Ausrichteinrichtung (22) ausgerichtet wird, dass das Schlauchstück (2) mit seiner gekrümmten Längsachse (10) in einer Schlauch-Bezugsebene (12) liegt, und dass die Bogenarmatur (4) durch eine Winkel-Einstelleinrichtung (24) mit einer Winkelskala (26) relativ zu dem ausgerichteten Schlauchstück (2) auf einen jeweils vorgegebenen Sonder-Drehwinkel (K) einer von der gekrümmten Längsachse (14) der Bogenarmatur (4) definierten Armatur-Krümmungsebene (16) relativ zu der Schlauch-Bezugsebene (12) eingestellt wird.

2. Verfahren nach Anspruch 1,
**dadurch gekennzeichnet, dass** die mit dem Schlauchstück (2) verbundene erste Bogenarmatur (4) mittels einer Armatur-Ausrichteinrichtung (28) derart ausgerichtet wird, dass ihre gekrümmte Längsachse (14) in einer Armatur-Bezugsebene (16) liegt, wobei anhand einer Winkelskala (30) der Winkel-Einstelleinrichtung (24) eine zweite, mit dem zweiten Leitungsende zu verbindende Bogenarmatur (6) relativ zu der ausgerichteten ersten Bogenarmatur (4) auf einen vorgegebenen Verdrehwinkel (V) der Krümmungsebene (16) der zweiten Bogenarmatur (6) relativ zu der Armatur-Bezugsebene (16) eingestellt wird.

3. Hilfsvorrichtung (20) zur Verwendung bei dem Verfahren nach Anspruch 1 oder 2 zum Konfektionieren von Hydraulik-Schlauchleitungen (1), wobei jeweils zumindest ein Leitungsende eines Schlauchstückes (2) mit einer starren, gekrümmtes Bogenarmatur (4, 6) zu verbinden ist,
bestehend aus einer Schlauch-Ausrichteinrichtung (22) mit Mitteln zum Ausrichten des Schlauchstückes (2) derart, dass das Schlauchstück (2) mit seiner - entsprechend einem natürlichen, herstellungsbedingten Krümmungsverlauf gekrümmten - Längsachse (10) in einer Schlauch-Bezugsebene (12) einstellbar ist, sowie aus einer in einem Aufnahmebereich für das mit einem Verbindungsabschnitt der Bogenarmatur (4) zu verbindende Leitungsende des Schlauchstückes (2) angeordneten Winkel-Einstelleinrichtung (24), die ein Anlageelement (52) zur definierten Positionierung der Bogenarmatur (4) sowie eine Winkelskala (26) aufweist, wobei das Anlageelement (52) einerseits über ein Drehteil (62) anhand der Winkelskala (26) derart um eine in der Schlauch-Bezugsebene (12) liegende Winkel-Stellachse (60) verdrehbar ist, dass die Bogenarmatur (4) mittels des Anlageelementes (52) relativ zu der Schlauch-Bezugsebene (12) um das mit der Bogenarmatur (4) zusammengesteckte Leitungsende verdrehbar ist, so dass die Bogenarmatur (4) relativ zu dem Schlauchstück (2) auf einen jeweils vorgegebenen Sonder-Drehwinkel (K) einer von der gekrümmten Längsachse (14) der Bogenarmatur (4) definierten Armatur-Krümmungsebene (16) relativ zu der Schlauch-Bezugsebene (12) einstellbar ist, wobei das Antageetement (52) andererseits zur Anpassung an einen Krümmungswinkel (α) der jeweiligen Bogenarmatur (4) um eine zu der Winkel-Stellachse (60) senkrecht verlaufende Verstellachse (54) eingestellt ist.

4. Hilfsvorrichtung nach Anspruch 3.
**dadurch gekennzeichnet, dass** in einem der Winkel-Einstelleinrichtung (24) gegenüberliegenden Endbereich der Schlauch-Ausrichteinrichtung (22) eine Armatur-Ausrichteinrichtung (28) angeordnet ist, die ein Anlageelement (44) zum Ausrichten und zur definierten Positionierung der ersten, bereits mit dem Schlauchstück (2) verbundenen Bogenarmatur (4) derart aufweist, dass deren Armatur-Krümmungsebene (16) eine Bezugsebene bildet, wobei die Winkel-Einstelleinrichtung (24) eine Winkefskafa (30) zum Einstellen einer zweiten, mit dem zweiten Leitungsende zu verbindenden Bogenarmatur (6) relativ zu der ausgerichteten ersten Bogenarmatur (4) aufweist, wobei das Drehteil (62) mit dem Anlageelement (52) anhand der Winkelskala (30) auf einen vorgegebenen Verdrehwinkel (V) der Krümmungsebene (16) der zweiten Bogenarmatur (6) relativ zu der als Bezugsebene fungierenden Krümmungsebene (16) der ersten Bogenarmatur (4) verdrehbar ist.

5. Hilfsvorrichtung nach Anspruch 3 oder 4,
**dadurch gekennzeichnet, dass** die Schlauch-Ausrichteinrichtung (22) mindestens ein für den jeweiligen Krümmungsverlauf verstellbares Aufnahmeelement (32) zur fixierenden Aufnahme des Schlauchstückes (2) aufweist.

6. Hilfsvorrichtung nach Anspruch 5,
**dadurch gekennzeichnet, dass** die Schlauch-Ausrichteinrichtung (22) mehrere über den Verlauf des Schlauchstückes (2) verteilt angeordnete Aufnahmeelemente (32) aufweist.

7. Hilfsvorrichtung nach Anspruch 5 oder 6,
**dadurch gekennzeichnet, dass** das/jedes Aufnahmeelement (32) ein gabefartiges Stützelement (34) zum Einlegen des Schlauchstückes (2) mit einem insbesondere vertikal verstellbaren Stellelement (36) aufweist.

8. Hilfsvorrichtung nach Anspruch 7,
**dadurch gekennzeichnet, dass** das/jedes Stellelement (36) von einem linear bezüglich der Höhe des Stützelementes (34) verstellbaren Druckzylinder gebildet ist.

9. Hilfsvorrichtung nach einem der Ansprüche 4 bis 8,
**dadurch gekennzeichnet, dass** die Armatur-Ausrichteinrichtung (28) und die Winkel-Einstelleinrichtung (24), die gegenüberliegend im Bereich jeweils eines der beiden Leitungsenden des Schlauchstückes (2) angeordnet sind relativ zueinander zur Anpassung an die Länge des jeweiligen Schlauchstückes (2) verstellbar sind.

10. Hilfsvorrichtung nach einem der Ansprüche 4 bis 9,
**dacurch gekennzeichnet, dass** das Anlageelement (44) der Armatur-Ausrichteinrichtung (28) zur Anpassung an einen Krümmungswinkel (α) der jeweiligen Bogenarmatur (4) einstellbar ist.

11. Hilfsvorrichtung nach einem der Ansprüche 3 bis 10,
**dadurch gekennzeichnet, dass** das Anlageelement (52) über ein Verbindungselerrtent (58) mit dem um die Winkel-Stellachse (60) verdrehbaren Drehteil (62) der Winkel-Einstelleinrichtung (24) verbunden ist, wobei das Drehteil (62) auf einem zylindrischen Außenumfang die erste, relativ zu einem feststehenden Zeiger (64) drehbare Winkelskala (26) für den Sonder-Drehwinkel (K) aufweist.

12. Hilfsvorrichtung nach Anspruch 11,
**dadurch gekennzeichnet, dass** das Drehteil (62) in einem Festteil (66) gelagert ist, wobei das Festteil (66) den Zeiger (64) für die drehbare Winkelskala (26) aufweist, und wobei das Festteil (66) auf seiner der drehbaren Winkelskala (26) gegenüberliegenden Seite die zweite Winkelskala (30) für den Verdrehwinkel (V) aufweist, wobei der zweiten, feststehenden Winkelskala (30) ein zusammen mit dem Drehteil (62) drehbarer Zeiger (70) zugeordnet ist.

## Claims

1. Method for assembling hydraulic hose lines (1), in which in each case at least one line end of a hose piece (2) is connected to a rigid, curved bent fitting (4, 6),
**characterised in that** the hose piece (2) is oriented according to a natural, production-related curvature course by means of a hose-orienting device (22) in such a way that the hose piece (2) lies with its curved longitudinal axis (10) in a hose reference plane (12), and **in that** the bent fitting (4) is set by an angle-setting device (24) with an angle scale (26) relative to the oriented hose piece (2) at a respectively predetermined special angle of rotation (K) of a fitting curvature plane (16), defined by the curved longitudinal axis (14) of the bent fitting (4), relative to the hose reference plane (12).

2. Method according to Claim 1,
**characterised in that** the first bent fitting (4) connected to the hose piece (2) is oriented by means of a fitting-orienting device (28) in such a way that its curved longitudinal axis (14) lies in a fitting reference plane (16), a second bent fitting (6) to be connected to the second line end being set using an angle scale (30) of the angle-setting device (24) relative to the oriented first bent fitting (4) at a predetermined angle of rotation (V) of the curvature plane (16) of the second bent fitting (6) relative to the fitting reference plane (16).

3. Auxiliary apparatus (20) for use in the method according to Claim 1 or 2 for assembling hydraulic hose lines (1), in which in each case at least one line end of a hose piece (2) is to be connected to a rigid, curved bent fitting (4, 6), comprising a hose-orienting device (22) having means for orienting the hose piece (2) in such a way that the hose piece (2) can be set with its longitudinal axis (10) - curved according to a natural, production-related curvature course - in a hose reference plane (12), and comprising an angle-setting device (24) which is arranged in a receiving region for the line end of the hose piece (2) to be connected to a connecting section of the bent fitting (4) and which has a seating element (52) for defined positioning of the bent fitting (4), and an angle scale (26), the seating element (52) on the one hand being rotatable, via a rotary part (62) using the angle scale (26), in such a way about an angle-setting axis (60) lying in the hose reference plane (12) that the bent fitting (4) is rotatable by means of the seating element (52) relative to the hose reference plane (12) about the line end fitted together with the bent fitting (14), so that the bent fitting (4) can be set relative to the hose piece (2) at a respectively predetermined special angle of rotation (K) of a fitting curvature plane (16), defined by the curved longitudinal axis (14) of the bent fitting (4), relative to the hose reference plane (12), the seating element (52) on the other hand being adjusted about an adjusting axis (54), running perpendicular to the angle-setting axis (60), for adjustment to a curvature angle (α) of the respective bent fitting (4).

4. Auxiliary apparatus according to Claim 3,
**characterised in that**, in an end region of the hose-orienting device (22) opposite the angle-setting device (24), there is arranged a fitting-orienting device (28) which has a seating element (44) for orienting and defined positioning of the first bent fitting (4), already connected to the hose piece (2), in such a way that the fitting curvature plane (16) of this fitting forms a reference plane, the angle-setting device (24) having an angle scale (30) for setting a second bent fitting (6), to be connected to the second line end, relative to the oriented first bent fitting (4), the rotary part (62) being rotatable with the seating element (52) using the angle scale (30) to a predetermined angle of rotation (V) of the curvature plane (16) of the second bent fitting (6) relative to the curvature plane (16) of the first bent fitting (4) acting as the reference plane.

5. Auxiliary apparatus according to Claim 3 or 4,
**characterised in that** the hose-orienting device (22) has at least one receiving element (32), adjustable to the respective curvature course, for the fixing reception of the hose piece (2) .

6. Auxiliary apparatus according to Claim 5,
**characterised in that** the hose-orienting device (22) has a plurality of receiving elements (32) arranged distributed over the course of the hose piece (2).

7. Auxiliary apparatus according to Claim 5 or 6,
**characterised in that** the/each receiving element (32) has a fork-like supporting element (34) for inserting the hose piece (2), having an especially vertically adjustable adjusting element (36).

8. Auxiliary apparatus according to Claim 7,
**characterised in that** the/each adjusting element (36) is formed by a pressure cylinder which is linearly adjustable with respect to the height of the supporting element (34).

9. Auxiliary apparatus according to one of Claims 4 to 8,
**characterised in that** the fitting-orienting device (28) and the angle-setting device (24), which are arranged opposite in the region of respectively one of the two line ends of the hose piece (2), are adjustable relative to one another for adjustment to the length of the respective hose piece (2).

10. Auxiliary apparatus according to one of Claims 4 to 9,
**characterised in that** the seating element (44) of the fitting-orienting device (28) is adjustable for adjustment to a curvature angle (α) of the respective bent fitting (4).

11. Auxiliary apparatus according to one of Claims 3 to 10,
**characterised in that** the seating element (52) is connected via a connecting element (58) to the rotary part (62), rotatable about the angle-setting axis (60), of the angle-setting device (24), the rotary part (62) having on a cylindrical outer circumference the first angle scale (26), rotatable relative to a stationary indicator (64), for the special angle of rotation (K).

12. Auxiliary apparatus according to Claim 11,
**characterised in that** the rotary part (62) is mounted in a fixed part (66), the fixed part (66) having the indicator (64) for the rotatable angle scale (26), and the fixed part (66) having, on its side opposite the rotatable angle scale (26), the second angle scale (30) for the angle of rotation (V), an indicator (70) rotatable together with the rotary part (62) being assigned to the second, stationary angle scale (30).

## Revendications

1. Procédé de réalisation de conduites tubulaires souples (1) hydrauliques, étant entendu que dans chaque cas au moins une extrémité d'un tronçon de tuyau flexible (2) est destinée à être reliée à un raccord courbe (4, 6) rigide, **caractérisé en ce que** le tronçon de tuyau flexible (2) est orienté, conformément à un tracé courbe naturel, imposé par les conditions de mise en place, au moyen d'un dispositif d'orientation du tuyau flexible (22), de telle sorte que le tronçon de tuyau flexible (2) avec son axe longitudinal (10) courbe se situe dans un plan de référence (12) du tuyau flexible, et **en ce que** le raccord courbe (4) est réglé au moyen d'un dispositif de réglage angulaire (24), muni d'une graduation angulaire (26), par rapport au tronçon de tuyau flexible (2) aligné, selon un angle de rotation spécial (K), prédéfini dans chaque cas, d'un plan de courbure (16) du raccord, défini par l'axe longitudinal (14) courbe du raccord courbe (4), par rapport au plan de référence (12) du tuyau flexible.

2. Procédé selon la revendication 1, **caractérisé en ce que** le premier raccord courbe (4), raccordé au tronçon de tuyau flexible (2), est orienté au moyen d'un dispositif d'orientation du raccord (28) de telle sorte que son axe longitudinal (14) courbe se situe dans un plan de référence (16) du raccord, étant entendu qu'à l'appui d'une graduation angulaire (30) du dispositif de réglage angulaire (24), un deuxième raccord courbe (6), à raccorder à la deuxième extrémité de la conduite, est réglé, par rapport au premier raccord courbe (4) orienté, selon un angle de rotation (V) prédéfini du plan de courbure (16) du deuxième raccord courbe (6) par rapport au plan de référence (16) du raccord.

3. Dispositif auxiliaire (20) destiné à être utilisé dans le procédé selon la revendication 1 ou 2 pour la réalisation de conduites tubulaires souples (1) hydrauliques, étant entendu que dans chaque cas au moins une extrémité d'un tronçon de tuyau flexible (2) est destinée à être reliée à un raccord courbe (4, 6) rigide, lequel dispositif est formé par un dispositif d'orientation du tuyau flexible (22) avec des moyens pour l'alignement du tronçon de tuyau flexible (2), de telle sorte que le tronçon de tuyau flexible (2) avec son axe longitudinal (10) - courbé conformément à un tracé courbe naturel imposé par la fabrication - peut être réglé dans un plan de référence (12) du tuyau flexible, ainsi que par un dispositif de réglage angulaire (24), qui est disposé dans une zone de réception de l'extrémité du tronçon de tuyau flexible (2) à relier à une partie d'assemblage du raccord courbe (4) et qui comporte un élément d'appui (52) pour le positionnement défini du raccord courbe (4) et une graduation angulaire (26), ledit élément d'appui (52) étant apte à tourner, d'une part, par l'intermédiaire d'un élément rotatif (62) à l'appui de la graduation angulaire (26) autour d'un axe de réglage angulaire (60) situé dans le plan de référence (12) du tuyau flexible, de telle sorte que le raccord courbe (4) est apte à tourner au moyen de l'élément d'appui (52) par rapport au plan de référence (12) du tuyau flexible autour de l'extrémité de la conduite, scellée avec le raccord courbe (4), de telle sorte que le raccord courbe (4) puisse être réglé par rapport au tronçon de tuyau flexible (2) selon un angle de rotation spécial (K), prédéfini dans chaque cas, d'un plan de référence (16) du raccord, défini par l'axe longitudinal (14) courbe du raccord courbe (4), par rapport au plan de référence (12) du tuyau flexible, ledit élément d'appui (52) étant réglé, d'autre part, en vue de son ajustement à un angle de courbure (α) du raccord courbe (4) concerné autour d'un axe de déplacement (54) orienté perpendiculairement par rapport à l'axe de réglage angulaire (60).

4. Dispositif auxiliaire selon la revendication 3, **caractérisé en ce que** dans une zone d'extrémité du dispositif d'orientation du tuyau flexible (22), opposée au dispositif de réglage angulaire (24), est disposé un dispositif d'orientation du raccord (28), qui comporte un élément d'appui (44) pour l'orientation et le positionnement défini du premier raccord courbe (4) déjà raccordé au tronçon de tuyau flexible (2), de telle sorte que le plan de courbure (16) dudit raccord forme un plan de référence, le dispositif de réglage angulaire (24) comportant une graduation angulaire (30) pour le réglage d'un deuxième raccord courbe (6), à relier avec la deuxième extrémité de la conduite, par rapport au premier raccord courbe (4) aligné, l'élément rotatif (62) avec l'élément d'appui (52) étant apte à tourner à l'appui de la graduation angulaire (30) selon un angle de rotation (V) prédéfini du plan de courbure (16) du deuxième raccord courbe (6) par rapport au plan de courbure (16) du premier raccord courbe (4), lequel fait fonction de plan de référence.

5. Dispositif auxiliaire selon la revendication 3 ou 4, **caractérisé en ce que** le dispositif d'orientation du tuyau flexible (22) comporte au moins un élément de réception (32), qui peut être réglé pour le tracé courbe correspondant et qui est destiné à recevoir de manière fixe le tronçon de tuyau flexible (2).

6. Dispositif auxiliaire selon la revendication 5, **caractérisé en ce que** le dispositif d'orientation du tuyau flexible (22) comporte plusieurs éléments de réception (32) répartis sur le tracé du tronçon de tuyau flexible (2).

7. Dispositif auxiliaire selon la revendication 5 ou 6, **caractérisé en ce que** le ou chaque élément de réception (32) comporte un élément support (34) en forme de fourche, destiné à recevoir le tronçon de tuyau flexible (2) et muni d'un élément de réglage (36) mobile en particulier dans le sens vertical.

8. Dispositif auxiliaire selon la revendication 7, **caractérisé en ce que** le ou chaque élément de réglage (36) est formé par un cylindre de pression mobile linéairement par rapport à la hauteur de l'élément support (34).

9. Dispositif auxiliaire selon l'une quelconque des revendications 4 à 8, **caractérisé en ce que** le dispositif d'orientation du raccord (28) et le dispositif de réglage angulaire (24), qui sont disposés face à face dans la zone de chacune des deux extrémités du tronçon de tuyau flexible (2), peuvent être déplacés l'un par rapport à l'autre en vue de leur ajustement à la longueur du tronçon de tuyau flexible (2) concerné.

10. Dispositif auxiliaire selon l'une quelconque des revendications 4 à 9, **caractérisé en ce que** l'élément d'appui (44) du dispositif d'orientation du raccord (28) peut être réglé en vue de son ajustement à un angle de courbure (α) du raccord courbe (4) concerné.

11. Dispositif auxiliaire selon l'une quelconque des revendications 3 à 10, **caractérisé en ce que** l'élément d'appui (52) est relié par l'intermédiaire d'un élément d'assemblage (58) à l'élément rotatif (62) du dispositif de réglage angulaire (24), lequel est apte à tourner autour de l'axe de réglage angulaire (60), l'élément rotatif (62) comportant sur un pourtour extérieur cylindrique la première graduation angulaire (26) pour l'angle de rotation spécial (K), apte à tourner par rapport à une aiguille (64) fixe.

12. Dispositif auxiliaire selon la revendication 11, **caractérisé en ce que** l'élément rotatif (62) est logé dans un élément fixe (66), ledit élément fixe (66) portant l'aiguille (64) pour la graduation angulaire (26) rotative et ledit élément fixe (66) comportant, sur son côté opposé à la graduation angulaire (26) rotative, la deuxième graduation angulaire (30) pour l'angle de rotation (V), une aiguille (70), apte à tourner conjointement avec l'élément rotatif (62), étant associée à la deuxième graduation angulaire (30) fixe.
